Europäisches Patentamt

European Patent Office

Office européen des brevets

(19)

(11) Veröffentlichungsnummer: **0 294 509**
**B1**

(12) **EUROPÄISCHE PATENTSCHRIFT**

(45) Veröffentlichungstag der Patentschrift:
**12.09.90**

(51) Int. Cl.⁵: **B60D 1/00**

(21) Anmeldenummer: **87109643.4**

(22) Anmeldetag: **04.07.87**

(54) **Höhenverstellbare Anhängerkupplung.**

(30) Priorität: **11.06.87  DE 3719448**

(43) Veröffentlichungstag der Anmeldung:
**14.12.88 Patentblatt 88/50**

(45) Bekanntmachung des Hinweises auf die Patenterteilung:
**12.09.90 Patentblatt 90/37**

(84) Benannte Vertragsstaaten:
**AT CH DE LI**

(56) Entgegenhaltungen:
**DE-A- 2 400 597**
**DE-A- 2 852 773**
**GB-A- 2 082 992**
**US-A- 3 175 846**
**US-A- 4 103 928**
**US-A- 4 330 105**

(73) Patentinhaber: **ROCKINGER Spezialfabrik für Anhängerkupplungen GmbH & Co.,**
**Waldmeisterstrasse 80 Postfach 45 04 64,**
**D-8000 München 45(DE)**

(72) Erfinder: **Baumgartner, Richard, Lichtenweg 15,**
**D-8254 Isen(DE)**

(74) Vertreter: **Blumbach Weser Bergen Kramer Zwirner Hoffmann Patentanwälte, Radeckestrasse 43,**
**D-8000 München 60(DE)**

## Beschreibung

Die Erfindung betrifft eine höhenverstellbare Anhängerkupplung nach dem Oberbegriff des Patentanspruchs 1.

Eine höhenverstellbare Anhängerkupplung dieser Art ist aus der amerikanischen Patentschrift 4,103,928 bekannt.

Höhenverstellbare Anhängerkupplungen finden unter anderem bei landwirtschaftlichen Fahrzeugen Anwendung. Eine an der Fachhochschule Kaiserslautern im Jahre 1977 angefertigte Ingenieurarbeit, L. Magin "Konstructive Möglichkeiten der Verbesserung von Anhängerkupplungen bei Ackerschlepper", beschreibt im einzelnen die Notwendigkeit für bzw. die Probleme bei der Höhenverstellbarkeit der Anhängerkupplung an landwirtschaftlichen Fahrzeugen. Angestrebt wird eine möglichst einfach und vor allem gefahrlos zu bedienende Vorrichtung. Basierend auf den Ergebnissen der genannten Ingenieurarbeit beschreibt die DE-PS 28 52 773 eine höhenverstellbare Anhängerkupplung, bei der ein Kupplungsträger, an dem ein Kupplungsmaul befistigt ist, in zwei senkrechten Führungsschienen eines Anhängerbocks höhenverstellbar geführt ist. Zur Höhenverstellung ist jeder Führungsschiene ein gesonderter Kraftantrieb in Form eines Hydraulikzylinders zugeordnet. Diese hydraulische Höhenverstellung erfüllt die Anforderungen bezüglich einfacher und gefahrloser Bedienbarkeit in hervorragender Weise. Für viele praktische Fälle ist diese Lösung, unter anderem wegen der erforderlichen Maßnahme zur Erzielung eines Gleichlaufs der beiden Zylinder zu aufwendig. In Einzelfällen können sich bei dieser bekannten Lösung auch Probleme hinsichtlich des möglichen Verstellhubes ergeben. Moderne Ackerschlepper sind Vielzweckfahrzeuge, für die eine Veilfalt von Anbaugeräten entwickelt wurden. Eine für einen Ackerschlepper vorgese hene höhenverstellbare Anhängerkupplung muß auf die zur Befestigung und Steuerung solcher Anbaugeräte am Ackerschlepper vorhandenen Einrichtungen Rücksicht nehmen, damit keine gegenseitige Störung eintritt. Außerdem wird natürlich angestrebt, daß möglichst alle Zusatzgeräte verwendet werden können, ohne daß hierfür die im Einzelfall nicht benötigte Anhängerkupplung jedesmal abgebaut werden muß. Diese Voraussetzungen erfordern in manchen Fällen einen großen Bewegungshub des Kupplungsträgers, wie er mit Hydraulikzylindern nicht ohne weiteres realisiert werden kann. Die aus der eingangs schon erwähnten US-PS 4,103,928 bekannte Anhängerkupplung verwendet zur Höhenverstellung einen einzigen Spindel-Muttertrieb, bei dem die Spindel in der Mitte zwischen den beiden Führungsschienen angeordnet und in einer oberen Traverse des Anhängerbocks frei nach unten hängend gelagert ist. Die von der Kupplung aufgenommene Stützlast muß über den Kupplungsträger, die mit ihm verbundene Spindelmutter und die Spindel auf den Anhängerbock übertragen werden. Selbst wenn bei Verwendung lediglich einer Spindel, diese entsprechend stark dimensioniert wird, so bleiben doch Sicherheitsbedenken bestehen, da ein Bruch der Spindel ein sofortiges Herunterfallen der Kupplung zur Folge hätte. Aus diesem Grund sind bei der aus der US-PS 4,103,928 bekannten Anhängerkupplung zusätzliche Stellschrauben vorgesehen, durch die der Kupplungsträger nach erfolgter Höheneinstellung in den Führungsschienen verklemmt wird. Damit aber wird der Vorteil der einfachen Bedienbarkeit aufgehoben, da für eine neue Höhenverstellung zunächst alle Stellschrauben gelöst werden müssen. Eine einzige zentrale Spindel kommt bei Ackerschleppern auch deshalb nicht in Betracht, weil sie die Benutzung der Zapfwelle ausschließen würde.

Man kann daran denken, diese Probleme durch Verwendung zweier Spindeln anstelle einer einzigen zu beseitigen. Die Verwendung von zwei Spindeln setzt aber einen Synchronlauf beider Spindeln voraus, damit der Kupplungsträger nicht in den Führungsschienen verkantet und festklemmt. Ein solcher Synchronlauf ist bei vertretbarem Aufwand in der Praxis nur bedingt erreichbar, weshalb eine solche Lösung bisher als nicht durchführbar angesehen wurde. Dazu kommt, daß für viele Anwendungsfälle die Möglichkeit bestehen muß, den Kupplungsträger samt Kupplung, sei es zu Wartungszwecken, aus dem Anhängerbock herauszunehmen. Wird eine Spindel oder werden zwei Spindeln freihängend am oberen Ende gelagert, dann könnten die Führungsschienen unten offen sein, so daß der Kupplungstärger am unteren Ende aus dem Anhängerbock herausgenommen werden könnte. Diese Möglichkeit birgt aber nicht nur die Gefahr, daß bei einer Tieferstellung der Kupplungsträger versehentlich aus dem Anhängerbock herausfällt, sie bedeutet vor allem angesichts des erheblichen Gewichts von Kupplungsträger mit Kupplung eine besonders schwierige Handhabung zumal, wenn man bedenkt, daß der Kupplungsträger mit der Kupplung beim Wiedereinsetzen gehalten und gleichzeitig die Spindeln gedreht werden müssen, bis deren Gewinde in den Spindelmuttern greifen. Dies ist einer Arbeit, die von einer Person allein nicht ausgeführt werden kann.

Aufgabe der Erfindung ist es, eine Anhängerkupplung zu schaffen, die kontinuierlich mit einem großen Verstellhub höhenverstellbar ist und sehr leicht zu handhaben ist.

Ausgehend von einer höhenverstellbaren Anhängerkupplung gemäß dem Oberbegriff des Patentanspruchs 1 wird diese Aufgabe durch die kennzeichnenden Merkmale dieses Anspruchs gelöst.

Durch die Verwendung zweier paralleler Spindeln wird nicht nur die Sicherheit erhöht, vielmehr wird dadurch vor allem die Anhängerkupplung bei Ackerschleppern verwendbar, deren Zapfwelle eine zentrale Spindel nicht zuläßt. Der Anhängerbock ist an seinem unteren Ende mit einer Abschlußplatte versehen. (Wenn hier Begriffe wie oben, unten, horizontal, vertikal, etc. der Einfachheit halber verwendet werden, dann beziehen sie sich immer auf den normalen Gebrauchszustand der höhenverstellbaren Anhängerkupplung.) Die untere Abschlußplatte schließt ein Herausfallen des Kupplungsträgers aus dem Anhängerbock aus. Außerdem können die Spindeln in dieser Abschlußplatte gelagert werden, was die Möglichkeit eröffnet, den Kupplungsträger mit Kupplung im Bedarfsfall nach oben aus dem Anhängerbock herauszunehmen. Zur Erzielung der erforderlichen Synchronisation zwischen den beiden Spindeln sind diese an ihrem unteren Ende über einen Zahnriementrieb oder ähnliches miteinander gekuppelt. Eine an einer der Spindeln angreifende Antriebskraft wird dadurch auf die andere Spindel übertragen. Wie bereits eingangs angedeutet, wird aufgrund von nicht völlig auszuschließendem Spiel sowie aufgrund der Torsion der Spindeln etc. die erstrebte Synchronisation in der Praxis nur angenähert erreicht werden können. Damit eine Verkantung des Kupplungsträgers aufgrund mangelnder Synchronisation der beiden Spindel-Muttertriebe nicht zu einem Verklemmen des Kupplungsträgers in den Führungsschienen führt, sind die seitlichen Führungsflächen des Kupplungsträgers abgerundet, so daß der Kupplungsträger um eine horizontale Achse im Rahmen des zu erwartenden Synchronisationsfehlers in den Führungsschienen verschwenkt werden kann. Außerdem sind die in den Kupplungsträger eingesetzten Spindelmuttern so ausgebildet, daß sie relativ zum Kupplungsträger verschwenkbar und gegenüber dessen seitlichen Führungsflächen vorzugsweise etwas zurückgesetzt sind, damit die vorerwähnte Verschwenkung des Kupplungsträgers nicht zu einem Verklemmen von Spindel und Spindelmutter führt.

Vorteilhafte Weiterbildungen der Erfindung sind in den Unteransprüchen gekennzeichnet und in der folgenden Beschreibung eines Ausführungsbeispiels im einzelnen erläutert.

Nachfolgend wird ein Ausführungsbeispiel der Erfindung anhand der Zeichnungen erläutert. Es zeigen:

Fig. 1 eine Vorderansicht der Anhängerkupplung, teilwiese im Schnitt, wobei sich der Kupplungsträger in seiner obersten Betriebsstellung befindet,

Fig. 2 eine Vorderansicht der Anhängerkupplung entsprechend Fig. 1 mit in die unterste Betriebsstellung gebrachtem Kupplungsträger,

Fig. 3 eine Draufsicht auf die Anordnung von Fig. 1, teilweise im Schnitt,

Fig. 4 eine Schnittansicht von Fig. 1 längs der Linie B-B,

Fig. 5 eine Teilschnittansicht von Fig. 1 längs der Linie C-C,

Fig. 6 eine Vorderansicht der oberen Teils der Anhängerkupplung, teilweise im Schnitt, ohne den Kupplungsträger,

Fig. 7 eine Schnittansicht von Fig. 6 längs der Linie D-D,

Fig. 8a eine Schnittansicht von Fig. 7 längs der Linie E-E,

Fig. 8b eine Ansicht entsprechend Fig. 8a jedoch mit eingesetztem Kupplungsträger, und

Fig. 9a und 9b eine Schnittdarstellung bzw. eine Draufsicht der Spindelmutter.

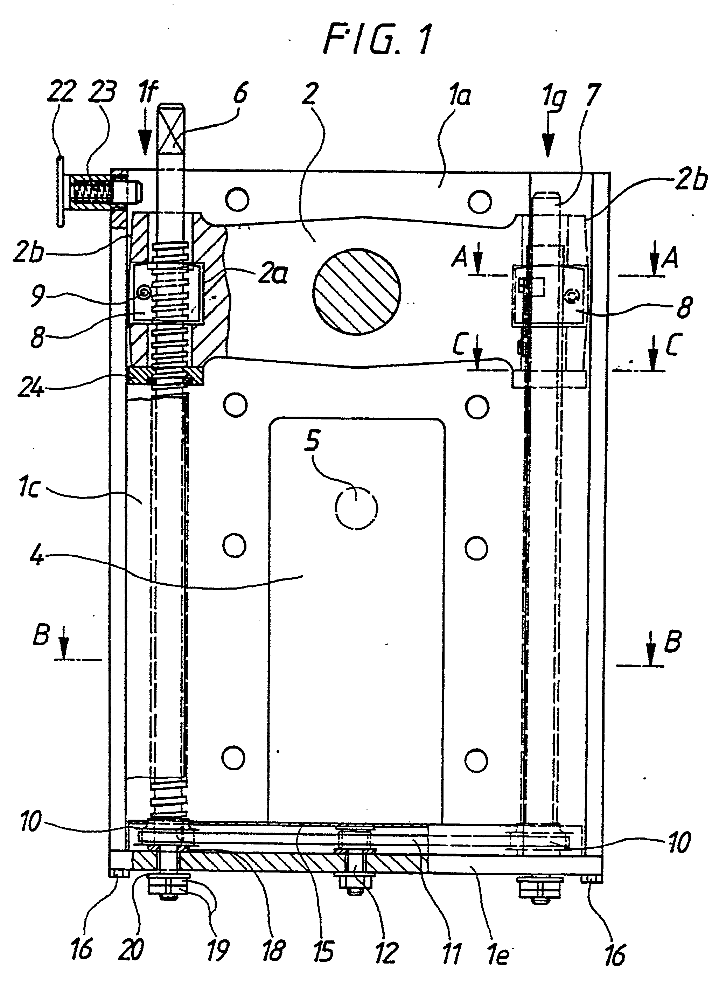

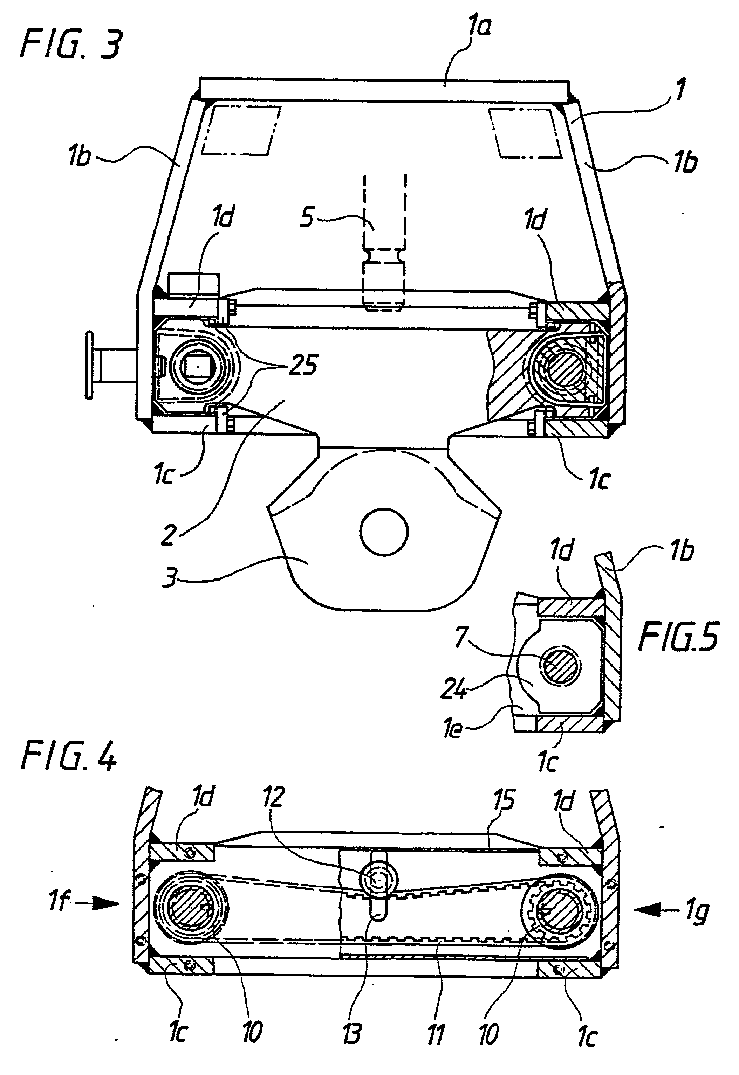

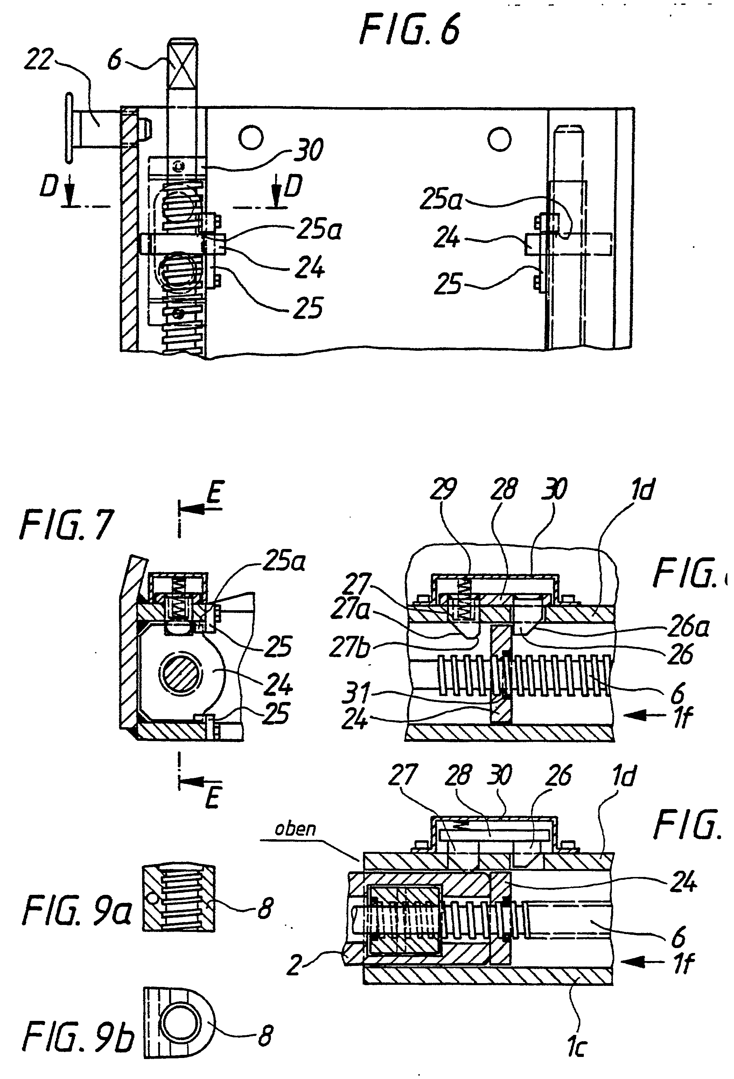

Wie aus den Fig. 1 und 3 erkennbar, umfaßt die Anhängerkupplung einen Anhängerbock 1, in dem höhenverstellbar ein Kupplungsträger 2 geführt ist, an welchem in üblicher Weise ein Kupplungsmaul 3 befestigt ist. Der Anhängerbock 1 weist beim dargestellten Ausführungsbeispiel eine am Fahrzeug zu befestigen de Halteplatte 1a auf. Von dieser Halteplatte stehen auf der am Fahrzeug abgewandten Seite Seitenplatten 1b ab. An ihrem freien Ende bilden die Seitenplatten 1b zusammen mit jeweiligen Führungsplatten 1c, 1d U-förmige Führungschienen 1f, 1g, deren Öffnungen gegeneinander gerichtet sind. In diese Führungsschienen greift der Kupplungsträger mit seinen seitlichen Enden, die entsprechend bearbeitete Führungsflächen aufweisen, ein. In bekannter Weise werden damit auf den Kupplungsträger einwirkende Horizontalkräfte über den formschlüssigen Eingriff mit den Führungsschienen auf den Anhängerbock 1 übertragen, ohne die später beschriebe Höhenverstelleinrichtung zu belasten. Wie in Fig. 1 dargestellt, ist die Halteplatte 1a mit einem Ausschnitt 4 versehen, durch den sich beispielsweise die Zapfwelle 5 eines Ackerschleppers erstrecken kann. Am unteren Ende ist der Anhängerbock 1 zumindest im Bereich der Führungsschienen 1f, 1g mit einer Abschlußplatte 1e versehen. In der Abschlußplatte 1e sind zwei Spindeln 6, 7 gelagert, und zwar je eine innerhalb jeder Führungsschiene 1f, 1g. Der Kupplungsträger 2 ist im Bereich der Führungsschienen mit Bohrungen versehen, durch die sich die Spindeln 6, 7 erstrecken. Etwa im mittleren Bereich in Vertikalrichtung weist der Kupplungsträger 2 auf beiden Seiten einen Ausschnitt 2a auf, in den jeweils eine Spindelmutter 8 eingesetzt ist, die in den Fig. 9a und 9b genauer dargestellt ist. Eine als gesondertes Teil ausgebildete und in den Kupplungsträger 2 eingesetzte Spindelmutter hat gegenüber einem direkt in den Kupplungsträger eingebrachten Gewinde den Vorteil, daß bei Verschleiß nur die Spindelmutter und nicht der gesamte Kupplungsträger ausgetauscht werden müssen. Ein weiterer wesentlicher Vorteil ist, daß dadurch in später näher erläuterter Weise Vorkehrungen getroffen werden können, die eine begrenzte Asynchronität der Bewegung der beiden Spindeln 6, 7 zulassen. Die Spindelmuttern 8 sind mit Hilfe von Stiften 9 im Kupplungsträger 2 gehalten, so daß sie bei Entnahme des Kupplungsträgers aus dem Anhängerbock nicht herausfallen, andererseits aber leicht ausgetauscht werden können.

Wie insbesondere aus Fig. 1 erkennbar, sind die seitlichen Führungsflächen 2b des Kupplungsträgers 2 mit einer Rundung versehen, so daß der Kupplungsträger gegenüber dem Anhängerbock in begrenztem Maß verschwenkt werden kann, ohne sich in den Führungsschienen zu verklemmen. In ähnlicher Weise sind die Spindelmuttern 8 an ihrer oberen Stirnfläche ballig ausgestaltet, so daß auch eine gewisse Verschwenkung des Kupplungsträgers 2 gegenüber den Spindelmuttern 8 möglich ist und ein Verschwenken des Kupplungsträgers gegenüber dem Anhängerbock nicht zu einem Festklemmen der Spindelmuttern 8 an den Spindeln führt. Außerdem sind die Außenseiten der Spindelmuttern gegenüber den seitlichen Führungsflächen 2b des Kupplungsträgers 2 etwas zurückgesetzt.

Eine der beiden Spindeln, bei dem dargestellten Ausführungsbeispiel die linke Spindel 6, wird zur Höhenverstellung des Kupplungsträgers manuell oder motorisch gedreht. Zur Erzielung einer möglichst synchronen Drehung beider Spindeln wird die Drehung der Spindel 6 mit Hilfe eines Zahnriementriebs auf die Sindel 7 übertragen. Zu diesem Zweck ist auf das untere Ende jeder der beiden Spindeln ein Zhanriemenrad 10 drehfest aufgesetzt. Um die Zahnriemenräder 10 ist ein Zahnriemen 11 gelegt. Damit die beweglichen Teile, also die Gewindespindeln 6, 7, die Zahnriemenräder 10 und der Zahnriemen 11 leicht montiert werden können und der Totgang des Zahnriementriebs bei einem Drehrichtungswechsel möglichst gering gehalten wird, ist ein Riemenspanner 12 (Fig. 4) vorgesehen. Bei dem dargestellten Ausführungsbeispiel ist der Riemenspanner 12 in einem Längsschlitz 13 der Abschlußplatte le nachstellbar befe stigt. Stattdessen könnte der Riemenspanner auch als Exzenter ausgebildet sein.

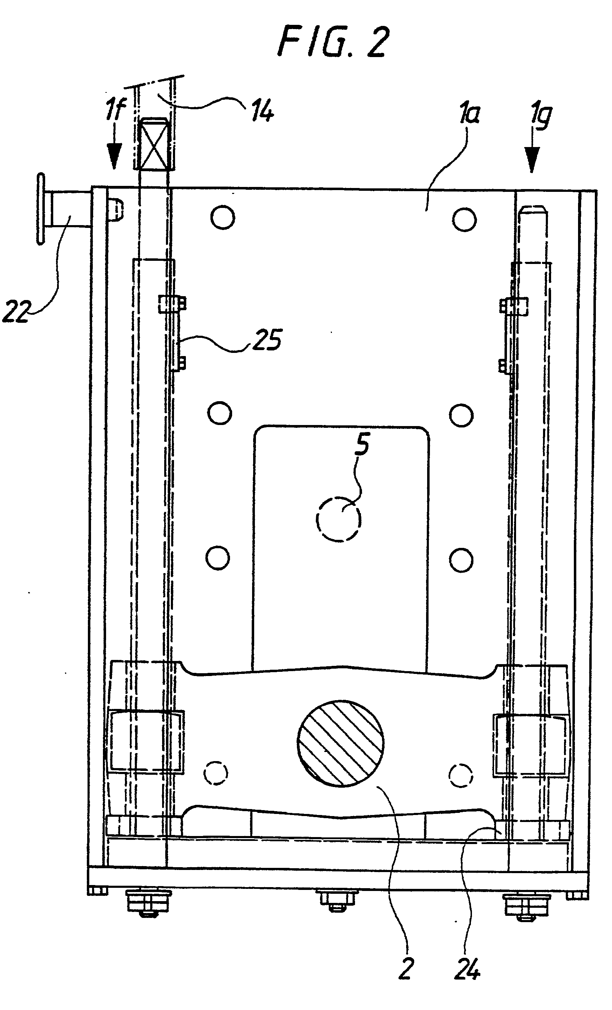

Die beim dargestellten Ausführungsbeispiel vorgesehene Bewegungsübertragung von der Spindel 6 auf die Spindel 7 mittels eines Zahnriementriebs stellt nur eine von zahlreichen Möglichkeiten dar. So könnten die Zahnriemenräder durch Kettenräder und der Zahnriemen durch eine Rollenkette ersetzt werden. Ebenso wäre es grundsätzlich möglich, aber in der Regel zu aufwendig, die Gewindespindeln mittels eines Kegelradantriebs oder Schneckentriebs zu verbinden. In der einfachsten Art erfolgt die Höhenverstellung mittels eines abnehmbaren, handbetätigten Kurbeltriebs 14 (Fig. 2), der auf das obere Ende mit einer entsprechenden Mitnehmerfläche ausgestatteten Spindel 6 gesetzt wird. Die erforderliche Drehbewegung der Gewindespindeln kann aber auch mittels eines Antriebsmotors erfolgen, zu dessen Abschaltung dann entsprechende Endschalter vorgesehen werden müßten. Auch könnte der Antrieb im unteren Bereich der Gewindespindeln angreifen, beispielsweise in der Form, daß der Zahnriemen (oder eine Rollenkette) entlang den Seitenplatten 1b nach hinten geführt und dort mit einem Antriebszahnriemenrad eines Motors in Eingriff steht. Zum Schutz der Zahnriemenräder 10 und des Zahnriemens 11 dient eine Abdeckung 15.

Die über das Kupplungsmaul 3, das der Einfachheit halber in den Fig. 1 und 2 nicht dargestellt ist, auf den Kupplungsträger 2 übertragene Stützbelastung wird von den beiden Spindeln 6, 7 aufgenommen und über die Abschlußplatte 1e auf den Anhängerbock 1 übertragen. Die Abschlußplatte 1e ist bei der dargestellten Ausführungsform mit Hilfe von Sechskantschrauben 16 an den Seitenplatten 1b sowie 1c und 1d festgeschraubt. Sie könnte statt dessen auch mit den Seitenplatten verschweißt sein.

Die Spindeln 6, 7 besitzen an ihrem unteren Ende unterhalb des jeweiligen Zahnriemenrads einen Abschnitt geringeren Durchmessers, wodurch eine Stufe gebildet wird, die sich über eine Scheibe 18 auf der Abschlußplatte 1e abstützt. Das mit geringerem Durchmesser versehene Ende der Spindeln durchsetzt eine jeweilige Bohrung in der Abschlußplatte 1e und ist beim dargestellten Ausführungsbeispiel am Ende mit einem Gewinde versehen, auf das zur Halterung der jeweiligen Spindel zwei gegeneinander verspannte Nutmuttern 19 geschraubt sind. Eine Beilagscheibe 20 befindet sich zwischen der Unterseite der Abschlußplatte 1e und der benachbarten Nutmutter 19.

Damit der Kupplungsträger 2 nicht versehentlich so weit nach oben verstellt wird, daß die Spindeln außer Eingriff mit den Spindelmuttern gelangen, ist am oberen Ende der einen Führungsschiene 1f ein federbelasteter Riegel 22 angeordnet. In der Ruhestellung ragt das vordere Ende des Riegels 22 in die zugehörige Führungsschiene 1f und bildet damit einen Anschlag für den Kupplungsträger 2. Soll der Kupplungsträger aus dem Anhängerbock entnommen werden, muß der Riegel 22 gegen die Kraft der Druckfeder 23 aus der Führungsschiene herausgezogen werden. Dann können die Spindeln gedreht werden, bis die Spindelmuttern außer Eingriff mit den Spindeln bzw. ihrem Gewinde gelangen. Vorzugsweise ist die Anordnung so getroffen, daß der Kupplungsträger 2 in diesem Moment noch von den Führungsschienen geführt wird. Hierdurch ist es nicht erforderlich, daß während dieser letzten Höhenverstellung der Kupplungsträger von Hand gehalten werden muß. Vielmehr kann zunächst die Spindel 6 so lange gedreht werden, bis die Gewinde außer Eingriff kommen. Dann kann der Kupplungsträger, erforderlichenfalls mit beiden Händen, erfaßt und herausgehoben werden. Hierfür bedarf es nur einer einzigen Person. Noch wichtiger ist diese Ausgestaltung beim Wiedereinsetzen des Kupplungsträger in den Anhängerbock. Der Kupplungsträger braucht dabei nur in die Führungsschienen hineingesteckt zu werden und kann dann sofort losgelassen werden, auch wenn die Gewinde von Spindelmuttern und Spindeln noch nicht in Eingriff gekommen sind.

Wie ausgeführt, sind die beiden Spindeln 6, 7 an ihrem unteren Ende in der Abschlußplatte 1e gelagert. Durch den Kupplungsträger 2 werden die Gewindespindeln stets parallel gehalten. Diese Parallelität darf nicht verloren gehen, wenn der Kupplungsträger 2 aus dem Anhängerbock entnommen ist, da sonst nicht nur eine Beschädigung der Spindeln auftreten könnte, sondern auch das Wiedereinsetzen des Kupplungsträgers sehr viel mühsamer würde. Eine feste Lagerung am oberen Ende der Spindel kann diese Aufgabe nicht erfüllen, da sie vor dem Herausnehmen des Kupplungsträgers 2 entfernt werden müßte.

Bei dem dargestellten Ausführungsbeispiel der Erfindung wird dieses Problem durch Haltemuttern 24 gelöst, von denen je eine unter dem Kupplungsträger von diesem getrennt auf jeder Spindel vorgesehen ist. Wie insbesondere aus Fig. 7 erkennbar, haben diese Haltemuttern in der Draufsicht eine solche Form, daß sie innerhalb der Führungsschienen unverdrehbar sind. Bei einer Drehung der Spindeln werden die Haltemuttern 24 deshalb zusammen mit dem Kupplungsträger in der Höhe verstellt. Wird der Kupplungsträger aus dem Anhängerbock herausgenommen, dann bleiben die Spindeln über die Haltemuttern 24 in den Führungsschienen geführt, so daß ihre Parallelität nicht verloren geht. Da die U-förmigen Führungsschienen zur Erreichung dieses Ziels nicht ausreichen, sind zumindest im oberen Bereich der Führungsschienen an den Stirnseiten der Führungsplatten 1c, 1d zusätzliche Leisten 25 angeordnet, die über die Führungsflächen der Führungsplatten nach innen vorstehen und an der offenen Seite der U-förmigen Führungsschienen 1f, 1g einen Anschlag für die Haltemuttern bilden. An den Leisten 25 sind Anlageflächen 25a ausgebildet (Fig. 6 und 7), gegen die die Haltemuttern 24 anstoßen, wenn der Kuplungsträger 2 soweit nach oben verstellt ist, daß er aus den Führungsschienen herausgehoben werden kann. Diese Anschlagflächen 25a legen somit die höchste Lage der Haltemuttern fest und verhindern zugleich, daß bei zurückgezogenem Riegel 22 bei fortgesetzter Drehung der Spindeln der Kupplungträger 2 von den Haltemuttern 24 aus den Führungsschienen herausgeschoben wird.

Die Haltemuttern können ihre Funktion, nämlich bei herausgenommenem Kupplungsträger, die Spindeln zu führen, nur dann erfüllen, wenn sichergestellt ist, daß sie nicht bei entnommenem Kupplungsträger durch Drehen der Spindeln nach unten verstellt werden. Bei einer Weiterbildung der Erfindung ist eine Blockiereinrichtung vorgesehen, die eine solche Verstellung verhindert. Wie insbesondere aus den Fig. 7, 8a und 8b erkennbar, umfaßt die Blockieranordnung einen Sperriegel 26 und ein Ausrückglied 27, die in entsprechenden Bohrungen der inneren Führungsplatte 1d der Führungsschiene 1f verschiebbar angeordnet sind. An der Außenseite der Führungsplatte 1d sind der Sperriegel 26 und das Ausrückglied 27 mittels einer Platte 28 miteinander verbunden. Eine Abdeckung 30 ist an der Außenseite der Führungsplatte 1d befestigt und schützt die Blockieranordnung. Eine Druckfeder 29, die sich an der Abdeckung abstützt, drückt die aus Sperriegel 26, Ausrückglied 27 und Platte 28 gebildete Riegelanordnung elastisch in das Innere der Führungsschiene 1f. In der durch die erwähnte Anschlagfläche 25a vorgegebenen höchsten Stellung der Haltemutter 24 befindet sich diese gerade zwischen dem Sperriegel 26 und dem Ausrückglied 27. Solange sich der Kupplungsträger 2 in den Führungsschienen befindet, stößt in diesem Zustand das Ausrückglied 27 gegen den Kupplungsträger 2, wodurch der gegenüber dem Ausrückglied kürzere Sperriegel 26 unter die Führungsfläche der Führungsplatte 1d zurückgezogen bleibt, wie es aus Fig. 8b erkennbar ist. In diesem Zustand kann die Spindel infolge des Anschlags der Haltemutter 24 an der Anschlagfläche 25a nicht im Sinne einer Höherverstellung gedreht werden. Eine Drehung zur Tieferverstellung ist ohne weiteres möglich. Wird jedoch in diesem Zustand der Kupplungsträger 2 aus den Führungsschienen herausgehoben, dann drückt die Druckfeder 29 den Sperriegel 26 und das Ausrückglied 27 in die Führungsschiene 1f hinein, so daß nun der Sperriegel 26 einen unteren Anschlag für die Haltemutter 24 bildet. Die Spindeln können nun weder in der einen noch in der anderen Richtung verstellt werden, und es ist gewährleistet, daß die Haltemuttern 24 in dieser Stellung verbleiben, bis der Kupplungsträger 2 wieder in die Führungsschienen eingesetzt wird. Wenn dies erfolgt, stößt die Unterkante des Kupplungsträgers gegen eine Schrägfläche 27a des Ausrückglieds 27 und stößt die Riegelanordnung wieder zurück, so daß erneut der in Fig. 8b gezeigte Zustand erreicht wird.

Wie schon angedeutet, ist der Sperriegel 26 etwas kürzer als das Ausrückglied 27, so daß im Zustand von Fig. 8b gewährleistet ist, daß der Sperriegel 26 die Bewegung der Haltemutter 24 nicht behindert. Bei einer Verstellung des Kupplungsträgers 2 von unten nach oben stößt dieser zunächst gegen eine Schrägfläche 26a des Sperriegels 26 und schiebt damit die Riegelanordnung um eine erste Stufe zurück. Bei weiterer Höhenverstellung stößt der Kupplungsträger dann gegen eine Schrägfläche 27b des noch teilweise in die Führungsschiene hineinreichenden Ausrückglieds 27, wodurch die Riegelanordnung um ein weiteres Stück zurückgeschoben wird.

In die Haltemuttern 24 kann je ein Abstreifer 31 eingesetzt sein, der bei einer Höhenverstellung zugleich eine Reinigung der Gewindespindeln bewirkt.

**Patentansprüche**

1. Höhenverstellbare Anhängerkupplung, insbesondere für landwirtschaftliche Fahrzeuge, umfassend
einen an einem Fahrzeug zu befestigenden Anhängerbock (1) mit zwei parallelen Führungsschienen (1f, 1g), in denen ein Kupplungsträger (2), an dem eine Kupplungseinrichtung (3) befestigt ist, höhenverstellbar geführt ist, wobei der Kupplungsträger (2) formschlüssig mit den Führungsschienen (1f, 1g) im Eingriff steht, und
einen Spindel-Muttertrieb (6,8; 7,8) zur Höhenverstellung des Kupplungsträgers (2) mit im Anhängerbock (1) gelagerter Spindel (6, 7) und im Kupplungsträger befestigter Spindelmutter (8),
dadurch **gekennzeichnet,** daß
jeder Führungsschiene (1f, 1g) ein gesonderter Spindel-Muttertrieb zugeordnet ist, deren Spindeln (6, 7) an ihrem jeweiligen unteren Ende im Anhängerbock (1) gelagert und mittels einer den sychronen Antrieb beider Spindeln (6, 7) bewirkenden Einrichtung (10, 11) miteinander gekoppelt sind,
entgegengesetzte seitliche Führungsflächen (2b) des Kupplungsträgers (2) mit einer Rundung ausgebildet sind derart, daß der Kupplungsträger (2) um eine im wesentlichen horizontale Achse begrenzt verschwenkbar ist,
sich die Spindelmuttern (8) in zu den seitlichen Führungsflächen (2b) hin offenen Ausnehmungen (2a) im Kupplungsträger (2) befinden,
die Spindelmuttern (8) in den Ausnehmungen relativ zum Kupplungsträger (2) um horizontale Achsen begrenzt verschwenkbar sind, und
für jede Spindel eine Haltemutter (24) vorgesehen ist, die bei einer Drehung der Spindel (6, 7) zusammen mit dem Kupplungsträger (2) höhenverstellbar sind und bei aus dem Anhängerbock (1) entnommenem Kupplungsträger (2) die Halterung der Spindeln (6, 7) an deren jeweiligem oberen Ende übernehmen.

2. Anhängerkupplung nach Anspruch 1, dadurch **gekennzeichnet,** daß die Führungsschienen (1c, 1d) im wesentlichen U-förmig und mit den Öffnungen gegeneinander gerichtet ausgebildet sind, daß wenigstens im oberen Bereich der Führungsschienen an dem freien Enden wenigstens eines Schenkels (1c, 1d) der U-Form ein nach innen gerichteter Ansatz (25) ausgebildet ist, derart, daß die Haltemuttern (24) in allen Horizontalrichtungen formschlüssig in den Führungsschienen (1f, 1g) geführt sind.

3. Anhängerkupplung nach einem der vorhergehenden Ansprüche, dadurch **gekennzeichnet**, daß die Einrichtung zur Erzielung einer synchronen Bewegung beider Spindeln (6, 7), ein Zahnriemenrad (10) an jeder Spindel, einen Zahnriemen (11) und eine Spanneinrichtung (12) für den Zahnriemen umfaßt.

4. Anhängervorrichtung nach einem der vorhergehenden Ansprüche, dadurch **gekennzeichnet**, daß eine Blockiereinrichtung (26-30) vorgesehen ist, die eine Drehung der Spindeln (6, 7) und damit eine Höhenverstellung der Haltemuttern (24) bei aus den Führungsschienen (1f, 1g) entnommenem Kupplungsträger (2) verhindert.

5. Anhängerkupplung nach Anspruch 4, dadurch **gekennzeichnet**, daß wenigstens im Bereich einer Führungsschiene (1f) ein Anschlag (25a) für die Haltemutter (8) vorgesehen ist, durch den die höchste Stellung der Haltemutter relativ zur Spindel (6) festgelegt wird.

6. Anhängerkupplung nach einem der Ansprüche 4 oder 5, dadurch **gekennzeichnet**, daß die Blockiereinrichtung eine Riegelanordnung (26-28) für wenigstens eine der Führungsschienen (1f) umfaßt, welche einen Sperriegel (26) und ein mit diesem verbundenes Ausrückglied (27) umfaßt, die in Bohrungen in einer Wand (1d) der Führungsschiene geführt sind und federnd in die von der Führungsschiene gebildete Führungsbahn gedrückt werden, wobei die in Axialrichtung der Spindel (6) einander abgewandten Flächen (26a, 27a) von Sperriegel und Ausrückglied derart geneigt sind, daß bei Anstoßen des Kupplungsträgers (2) an eine solche Fläche der Sperriegel und das Ausrückglied aus der Führungsbahn heraus in die Wand der Führungsschiene hinein gedrückt werden.

7. Anhängerkupplung nach Anspruch 6, dadurch **gekennzeichnet**, daß Sperriegel (26) und Ausrückglied (27) so gestaltet sind, daß das Ausrückglied (27) noch über die Führungsfläche der zugehörigen Wand (1d) der Führungsschiene (1f) in die Führungsbahn vorsteht, wenn das vorderste Ende des Sperriegels (27) mit dieser Führungsfläche im wesentlichen fluchtet.

## Claims

1. A towing coupling which is adjustabe in respect of height, in particular for agricultural vehicles, including:
    a towing mounting (1) to be secured to a vehicle, with two parallel guide bars (1f, 1g) in which a coupling carrier (2) to which a coupling device (3) is secured is guided adjustaby in respect of height, wherein the coupling carrier (2) is in positive engagement with the guide bars (1f, 1g) and
    a spindle-nut drive (6, 8; 7, 8) for adjustment of the coupling carrier (2) in respect of height, with a spindle (6, 7) mounted in the towing mounting (1) and a splindle nut (8) fixed in the coupling carrier, characterised in that
    associated with each guide bar (1f, 1g) is a separate spindle-nut drive, the spindles (6, 7) of which are mounted at their respective lower ends in the towing mounting (1) and are coupled together by means of a device (10, 11) for producing synchronous drive for the two spindlels (6, 7),
    oppositely disposed lateral guide surfaces (2b) of the coupling carrier (2) are provided with a rounded configuration in such a way that the coupling carrier (2) is limitedly pivotable about a substantially horizontal axis,
    the spindle nuts (8) are disposed in openings (2a) in the coupling carrier (2), which are open towards the lateral guide surfaces (2b),
    the spindle nuts (8) are limitedly pivotable in the openings about horizontal axes relative to the coupling carrier (2), and
    provided for each spindle is a holding nut (24) which are adjustable in respect of height upon a rotary movement of the spindles (6, 7) together with the coupling carrier (2) and which when the coupling carrier (2) is removed from the towing mounting (1) take over holding the spindles (6, 7) at their respective upper ends.

2. A towing coupling according to claim 1 characterised in that the guide bars (1c, 1d) are substantially U-shaped and are designed with their openings directed towards each other, and that an inwardly directed projection (25) is provided at least in the upper region of the guide bars at the free end of at least one leg (1c, 1d) of the U-shape, in such a way that the holding nuts (24) are positively guided in all horizontal direction in the guide bars (1f, 1g).

3. A towing coupling according to one of the preceding claims characterised in that the device for producing a synchronous movement of the two spindles (6, 7) includes a toothed belt pulley (10) on each spindle, a toothed belt (11) and a tensioning means (12) for the toothed belt.

4. A towing coupling according to one of the preceding claims characterised in that there is provided a blocking means (26–30) to prevent rotary movement of the spindles (6, 7) and therewith adjustment in respect of height of the holding nuts (24) when the coupling carrier (2) is removed from the guide bars (1f, 1g).

5. A towing coupling according to claim 4 characterised in that provided at least in the region of a guide bar (1f) is an abutment (25a) for the holding nut (8), for fixing the highest position of the holding nut relative to the spindle (6).

6. A towing coupling according to one of the claims 4 and 5 characterised in that the blocking means includes a bolt arrangement (26–28) for at least one of the guide bars (1f), which includes a locking bolt (26) and a disengagement member (27) connected thereto, the locking bolt and the disengagement member being guided in bores in a wall (1d) of the guide bar and being urged resiliently into the guide path formed by the guide bar, wherein the surfaces (26a, 27a) of the locking bolt and the disengagement member, which are facing away from each other in the axial direction of the spindle (6), are inclined in such a way that when the coupling carrier (2) encounters such a surface the locking bolt and the disengagement member are urged out of the guide path into the wall of the guide bar.

7. A towing coupling according to claim 6 characterised in that the locking bolt (26) and the disengagement member (27) are of such a configuration that the disengagement member (2) still projects into the guide path beyond the guide surface of the associated wall (1d) of the guide bar (1f) when the foremost end of the locking bolt (27) is substantially aligned with said guide surface.

**Revendications**

1. Dispositif d'attelage de remorque réglable en hauteur, en particulier pour des véhicules agricoles, comprenant une attache de remorque (1) à fixer à un véhicule, comportant deux rails de guidage (1f, 1g) parallèles, dans lesquels est guidé un support d'attelage (2) réglable en hauteur, sur lequel est fixé un dispositif d'attelage (3), le support d'attelage (2) étant en prise avec les rails de guidage (1f, 1g) par complémentarité de formes, et un mécanisme broche-écrou (6, 8; 7, 8) pour le réglage en hauteur du support d'attelage (2), comportant une broche (6, 7) logée dans l'attache de remorque (1) et un écrou de broche (8) fixé au support d'attelage, caractérisé en ce qu'un mécanisme broche-écrou séparé est associé à chaque rail de guidage (1f, 1g), mécanisme dont les broches (6, 7) sont montées sur son extrémité inférieure respective dans l'attache de remorque (1) et sont conjuguées au moyen d'un dispositif (10, 11) provoquant la commande synchrone des deux broches (6, 7), des surfaces latérales de guidage (2b) opposées du support d'attelage (2) sont conformées avec un arrondi de manière telle que le support d'attelage (2) puisse pivoter de manière restrictive autour d'un axe essentiellement horizontal, les écrous de broches (8) sont situés dans des évidements (2a) du support d'attelage (2) qui sont ouverts en direction des surfaces latérales de guidage (2b), les écrous de broches (8) peuvent pivoter dans les évidements autour d'axes horizontaux, de manière restrictive par rapport au support d'attelage (2) et il est prévu pour chaque broche un écrou de serrage (24) qui, lorsque la broche tourne (6, 7), peut être réglé en hauteur conjointement avec le support d'attelage (2) et qui, lorsque le support d'attelage (2) est retiré de l'attache de remorque (1), prend en charge le serrage de la broche (6, 7) respectivement à son extrémité supérieure.

2. Dispositif d'attelage de remorque selon la revendication 1, caractérisé en ce que les rails de guidage (1c, 1d) sont essentiellement conformés en U et dirigés l'un vers l'autre par leur ouverture, qu'une embase (25) dirigée vers l'intérieur est conformée au moins dans la zone supérieure des rails de guidage à l'extrémité libre d'au moins une branche (1c, 1d) de la forme en U, de manière telle que les écrous de serrage (24) soient guidés dans les rails de guidage (1f, 1g) par complémentarité de formes dans toutes les directions horizontales.

3. Dispositif d'attelage de remorque selon l'une quelconque des revendications précédentes, caractérisé en ce que le dispositif pour obtenir un déplacement synchrone des deux broches (6, 7) comprend une roue à courroie dentée (10) sur chaque broche, une courroie dentée (11) et un dispositif de serrage (12) pour la courroie dentée.

4. Dispositif d'attelage de remorque selon l'une quelconque des revendications précédentes, caractérisé en ce qu'il est prévu un dispositif de blocage (26–30) qui empêche une rotation des broches (6, 7) et, ainsi, un déplacement en hauteur des boulons de serrage (24) lorsque le support d'attelage (2) est retiré des rails de guidage (1f, 1g).

5. Dispositif d'attelage de remorque selon la revendication 4, caractérisé en ce qu'il est prévu, au moins dans la zone d'un rail de guidage (1f), une butée (25) pour l'écrou de serrage (8), au moyen de laquelle on détermine la plus haute position du boulon de serrage par rapport à la broche (6).

6. Dispositif d'attelage de remorque selon la revendication 4 ou 5, caractérisé en ce que le dispositif de blocage comprend un dispositif de verrouillage (26–28) pour au moins un des rails de guidage (1f), lequel comprend un verrou de blocage et un élément de désenclenchement (27) qui est relié à celui-ci, qui sont guidés dans des perçages d'une paroi (1d) du rail de guidage et sont pressés de manière élastique dans la glissière formée par le rail de guidage, dispositif dans lequel les faces (26a, 27a) du verrou de blocage et de l'élément de désenclenchement, opposées l'une à l'autre dans la direction axiale de la broche (6), sont réunies d'une manière telle que, lorsque le support d'attelage (2) bute contre une telle face, le verrou de blocage et l'élément de désenclenchement sortant de la glissière soient poussés dans la paroi du rail de guidage.

7. Dispositif d'attelage de remorque selon la revendication 6, caractérisé en ce que le verrou de blocage (26) et l'élément de désenclenchement (27) sont réalisés de manière telle que l'élément de désenclenchement (27) soit encore en saillie dans la glissière, au-dessus de la surface de guidage de la paroi (1d) associée du rail de guidage (1f), lorsque l'extrémité la plus en avant du verrou de blocage (27) s'aligne pour l'essentiel avec cette surface de guidage.

# FIG. 1

# FIG. 2

**FIG. 3**

**FIG. 5**

**FIG. 4**

*FIG.6*

*FIG.7*

*FIG.9a*

*FIG.9b*